Europäisches Patentamt

European Patent Office

Office européen des brevets

(11) Publication number: **0 238 215**
A1

# (12) EUROPEAN PATENT APPLICATION

(21) Application number: **87301484.9**

(22) Date of filing: **20.02.87**

(51) Int. Cl.4: **B66F 7/06 , B66F 7/08 , B62B 3/02 , B60R 5/04**

(30) Priority: **14.03.86 GB 8606330**

(43) Date of publication of application:
**23.09.87 Bulletin 87/39**

(84) Designated Contracting States:
**DE ES FR GB IT**

(71) Applicant: **Kentinental Engineering Limited
Maidstone Road
Platt, Borough Green Sevenoaks Kent TN15
8JA(GB)**

(72) Inventor: **Edmonds, Michael George
60a Blendon Drive
Bexley Kent(GB)**
Inventor: **Betts, David Ronald
67 Cedar Drive Sutton at Hone
Dartford Kent(GB)**

(74) Representative: **Spence, Anne et al
Spence & Townsend Mill House Wandle
Road
Beddington Croydon Surrey CR0 4SD(GB)**

(54) Lifting apparatus.

(57) The invention concerns a lifting apparatus having a base support connected by coupling means to an upper support carrying a turntable. The lifting apparatus is movable between an extended position in which the supports are spaced apart and a collapsed condition in which they are adjacent one another and are urged to the extended condition, by struts which may be gas struts or mechanical interconnections such as screws and nuts.

The lifting apparatus is particularly intended to be located in the back of a vehicle having a ledge extending above the floor of the vehicle so that it can be used to lift loads into and out of the vehicle from and to a foldable trolley.

FIG.1

# LIFTING APPARATUS

## BACKGROUND OF THE INVENTION

This invention relates to lifting apparatus and more particularly to lifting apparatus having a base support and an upper support connected by a parallel movement coupling for movement between a collapsed condition in which said supports lie adjacent one another and an extended condition in which they are spaced apart.

While such lifting apparatus is known, this is conventionally powered by hydraulic members which require connection to a hydraulic supply and no means is provided for easy rotation of a load on the upper platform.

UK Patent Specification 2157258 discloses an apparatus which uses a gas strut to assist in lifting a support platform, but the coupling is such as to produce a pivoting action of the upper support with horizontal movement as well as lifting movement, this being more complicated to produce and being undesirable in most situations. The platform has no means for enabling loads to be rotated thereon.

European Specification 0119901 discloses a lifting apparatus using vertically extending gas struts for lifting a platform but here again the platform has no means for rotating heavy loads thereon and the straight lift of the struts does not allow the lifting apparatus to be collapsed to a position in which the supports lie adjacent one another.

One object of the present invention is to provide a lifting apparatus which is simple to construct and can be used both for lifting and rotating a load.

The invention is particularly concerned with, but not limited to, apparatus for moving a load into and out of the back of a vehicle, for example a hatchback car, in which there is a ledge extending above the floor of the said back, over which ledge the load must be lifted.

UK Patent Specification 2123761 discloses a trolley with a detachable trolley top for moving a load, such as a photocopier or computer, into and out of a vehicle such as an estate car where the floor of the car back is not screened by such a ledge. Another object of the present invention is to provide lifting apparatus in combination with such a trolley which allows the trolley to be used with a car having a ledge. While UK Specification 2157258 discussed above provides a lifting apparatus for such a purpose it is complicated to make and is not useful for other purposes.

## SUMMARY OF THE INVENTION

The present invention, in one aspect, provides lifting apparatus comprising a base support, an upper support, a parallel movement coupling means connecting the base support and the upper support such that the upper support can be moved relative to the base support between a collapsed condition in which the supports lie adjacent one another and an extended condition in which they are spaced apart, at least one lifting means effectively connected between the base support and the upper support and operable to move the upper support to its extended condition, a rotatable support platform and platform mounting means pivotally mounting the platform on the upper support for rotation through at least 90 degrees.

Preferably the or each lifting means, which may be a gas strut or screw and nut arrangement, is connected via a lever to a torque bar connected to the coupling means.

In another aspect the invention provides apparatus for moving loads into and out of the back of a vehicle having a ledge extending above the floor of the back comprising lifting apparatus having a base support, an upper support, coupling means connecting the upper support to the base support for relative movement between a collapsed condition in which the supports lie adjacent one another and an extended condition in which they are spaced apart, locating means arranged to locate the base support on the floor of a vehicle, the locating means including adjustable engagement means for restraining the locating means against horizontal movement, lifting means effectively connected between the base support and the upper support for moving the upper support to its extended condition, a rotatable platform, and platform mounting means mounting the platform on the upper support for rotation relative thereto through at least 90 degrees, and a foldable trolley.

In a further aspect the invention provides a method of loading and unloading a load into or out of a vehicle comprising moving a load supported on a detachable top of a trolley adjacent a vehicle containing a lifting apparatus, if necessary adjusting the height of the lifting apparatus and/or the height of the trolley base so that the upper surface of the lifting apparatus is substantially level with the top of the trolley base, moving the load and trolley top onto the lifting apparatus, revolving the top of the lifting apparatus and lowering the load on the lifting apparatus into the vehicle, the unloading comprising the reverse process.

## BRIEF DESCRIPTION OF THE DRAWINGS

Embodiments of lifting apparatus and method , in accordance with the invention, will now be described by way of example only, with reference to the accompanying drawings of which:-

Figure I is a side view of lifting apparatus,

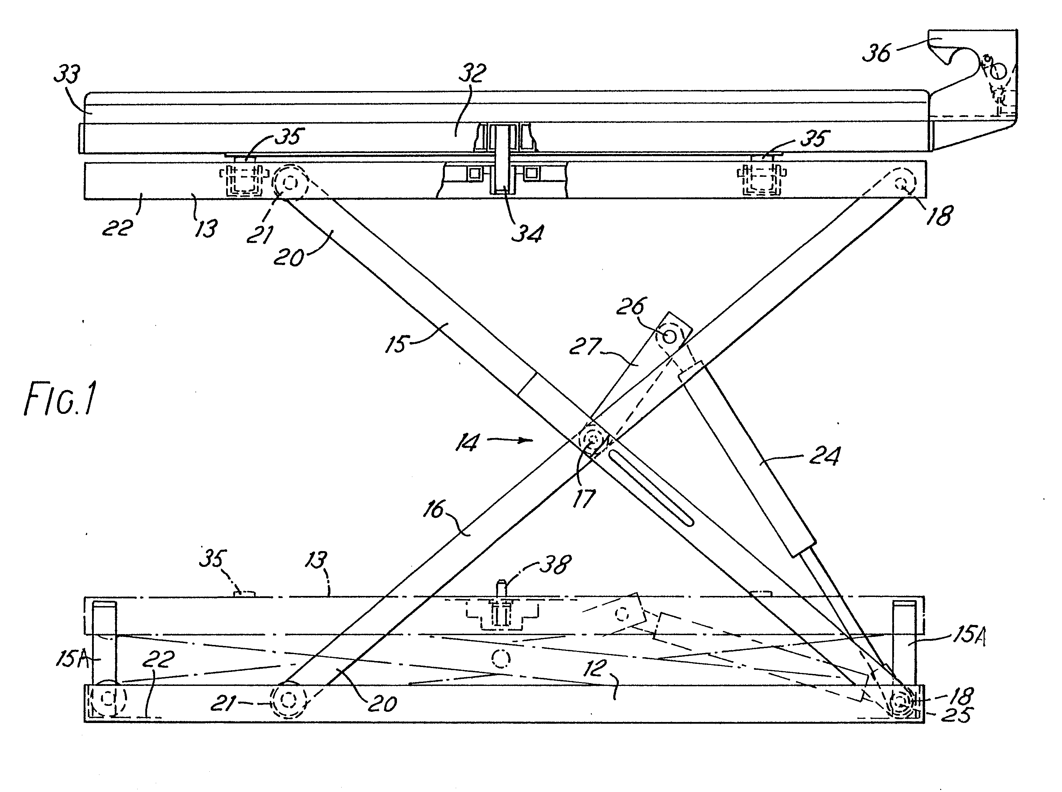

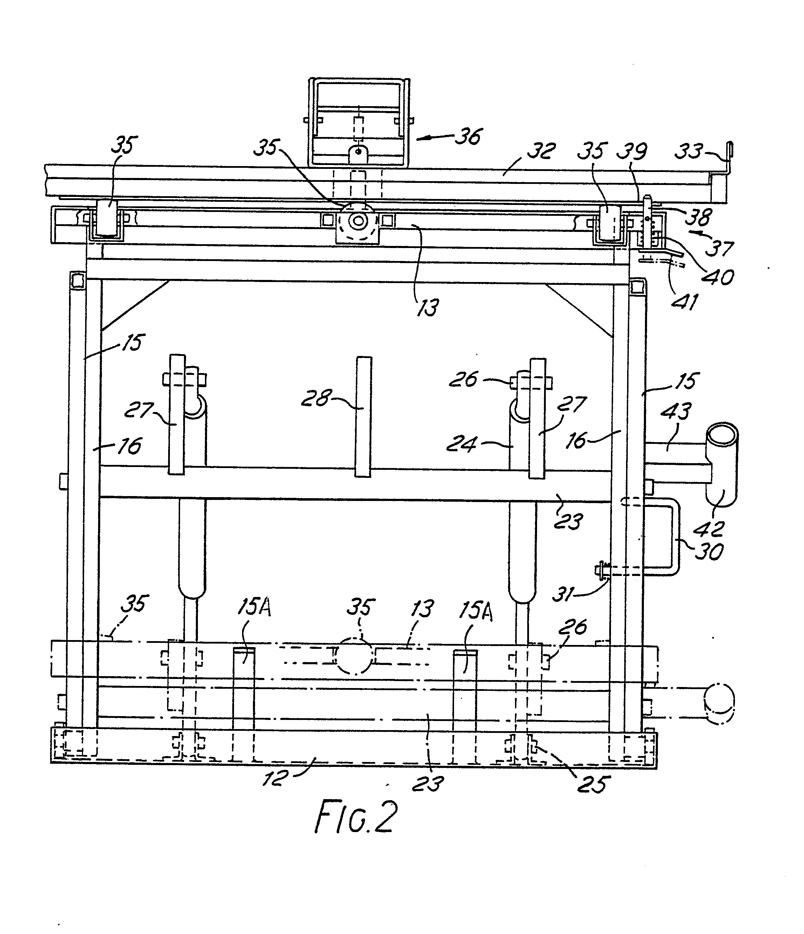

Figure 2 is a view taken at right angles to Figure I of the apparatus of Figure I,

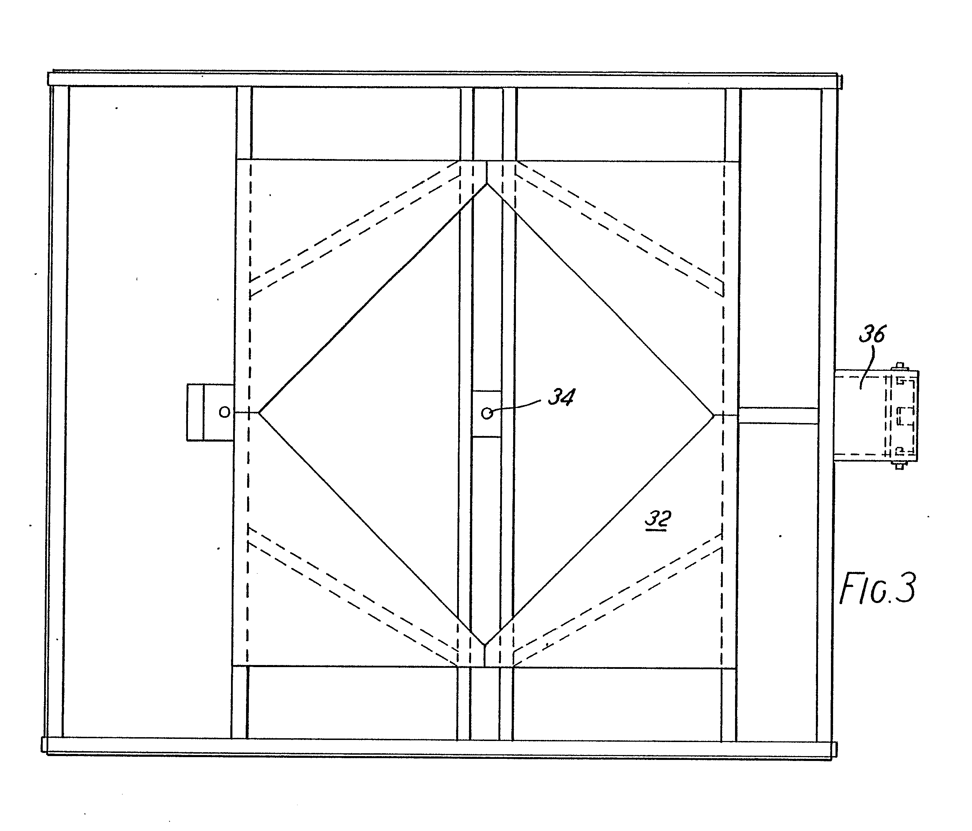

Figure 3 is a plan view of the turntable of the apparatus,

Figure 4 is a diagramatic plan view of a space frame for use with the lifting apparatus,

Figure 5 shows a trolley suitable for use with the lifting apparatus,and

Figures 6 and 7 show views corresponding to those of Figs. I and 2 with alternative forms of lifting means but otherwise the same.

## DETAILED DESCRIPTION OF ONE EMBODIMENT

The lifting apparatus comprises a rectangular base frame I2, made up from angular sectioned elongate members, and a similar upper frame I3, the frames being coupled together by a parallel movement coupling I4 for relative movement between a collapsed condition in which the base and upper support frames lie adjacent one another and an extended condition in which they are spaced apart but still directly one above the other.

The base frame includes upwardly extending posts I5A on which the upper frame is supported in the collapsed condition. The coupling I4 at each side of the apparatus comprises a pair of tubular elongate bars I5, I6 pivotally coupled adjacent their centre portions at I7 and each having one end I8 pivotally coupled to a respective one of the base and upper support frames and the other end 20 carrying a roller 2I pivotally connected thereto and arranged to run in a track 22 in a respective one of the upper and base frames for horizontal movement relative thereto. The central portions of the bars I6 on opposite sides of the apparatus are connected by a torque bar 23.

A pair of gas struts 24 have their lower ends pivotally connected at 25 to the base frame and their upper ends pivotally connected at 26 to the ends of respective levers 27 secured to the torque bar 23. A further central lever 28 also secured to the torque bar allows a third strut to be coupled or uncoupled as desired to vary the lifting power of the apparatus. The arrangement is such that the pressure in the extendable struts urges the lifting apparatus to the extended condition. The struts can, for example, be pumped with nitrogen to any selected pressure, for example they are pre-set to lift a load from 50 kilos to I30 kilos.

A catch 30 loaded by a spring 3I is arranged for releasably locking the lifting apparatus either in its extended or its collapsed condition.

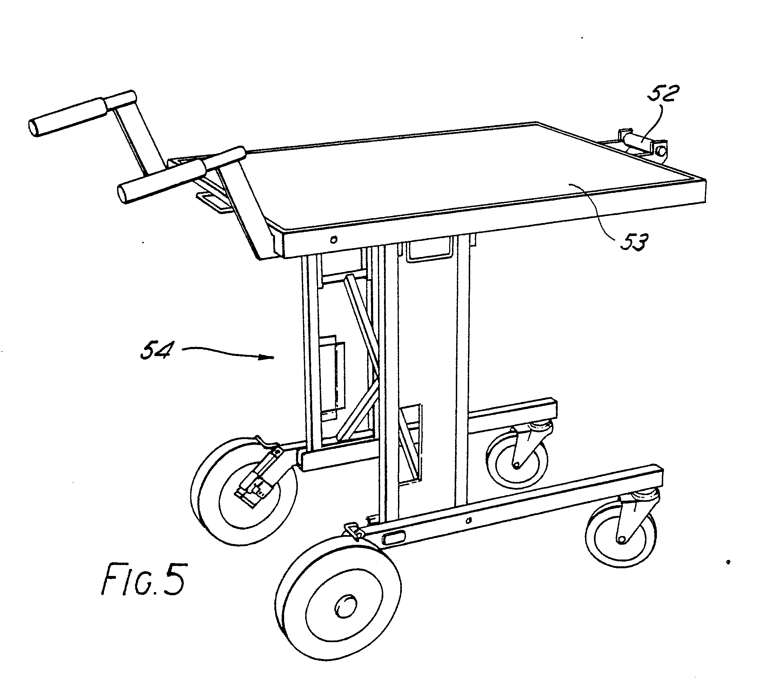

A rotatable platform or turntable 32 having an upwardly extending rim 33 is rotatably supported on the upper support I3 by means of a central pivot pin 34 and four roller bearing means 35 spaced at 90° intervals around the upper support and extending from the upper surface thereof. One side of the turntable is provided with a releaseable hook shaped catch mechanism 36 adapted to engage with the carrying handle 52 of the trolley top 53 of a trolley 54, as seen in Figure 5 and as described in the above mentioned British Specification 2I2376I , to lock the trolley top to the turntable. Locking means 37 for locking the turntable in the position shown or at 90° thereto is formed by a pin 38 extendable into an opening 39 in the turntable, the pin being loaded by a spring 40 into the engaged position and being releasable by an operating handle 4I.

While the gas pressure in the struts is set just to lift an expected load, so the apparatus can be collapsed, when loaded, by a gentle push down, additional pressure may be required for heavier than expected loads. A further strut can be coupled to lever 28 or more pressure pumped into the struts. Alternatively manual lifting power can be added by inserting a lever (not shown) in the socket 42 which is coupled by arm 43 to one bar I5 and applying manual force to the lever.Preferably the gas struts are lockable in desired positions.

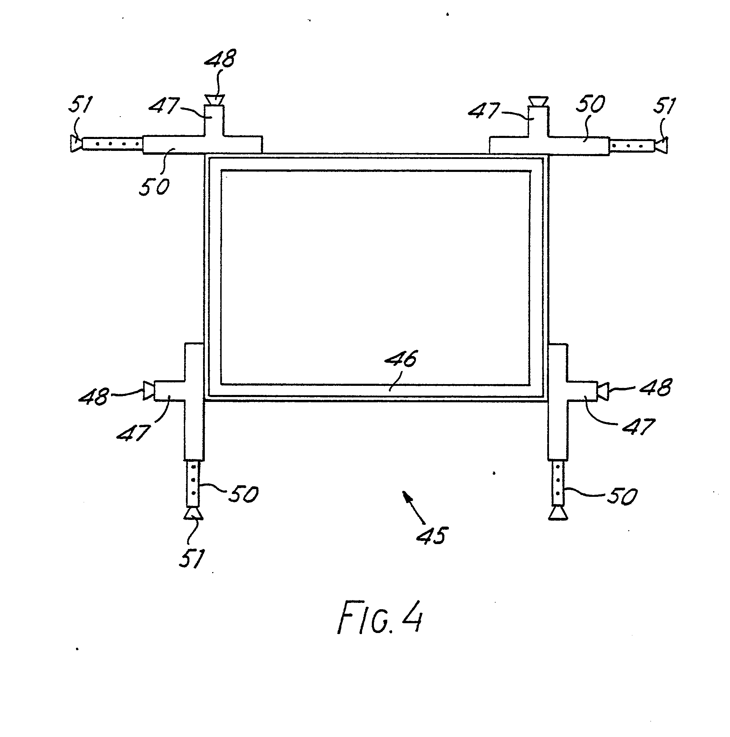

Referring now to Figure 4, a locating frame 45 is provided for locating the lifting platform of Figures I to 3 in the back of a vehicle such as a hatch back car. The frame comprises a rectangular framework 46 made from L section angled lengths to define a recess to receive the base support member of the lifting apparatus as a close fit. The frame 46 has secured to the outer edges thereof four fixed struts 46 ending in feet 48 and four extensible struts 50 ending in feet 5I. The fixed struts are engaged against the sides at the back of a car and the extensible struts are adjusted to engage opposite sides and locate the frame securely in the back of the car. Means are provided for locking the extensible struts at their selected lengths.

While the lifting apparatus can be used in many applications its use for lifting loads into and out of the back of a hatch back vehicle in combination with the trolley of the above mentioned British Specification 2I2376I will now be described.

The lifting apparatus is located in the space frame in the back of the vehicle. The load to be carried is wheeled on the trolley to a position adjacent to the back of the vehicle and the heights of the lifting apparatus and/or trolley base are adjusted until they are level at a height above the top of the ledge at the back of the vehicle. The turntable is rotated so that its long side is parallel to the length of the vehicle . The load and trolley top are now moved from the trolley base onto the turntable and the trolley top is locked to the turntable. The turntable is then rotated through 90° until its long side is normal to the length of the vehicle and the lifting apparatus is then collapsed and locked into its collapsed condition. For unloading the procedure is reversed.

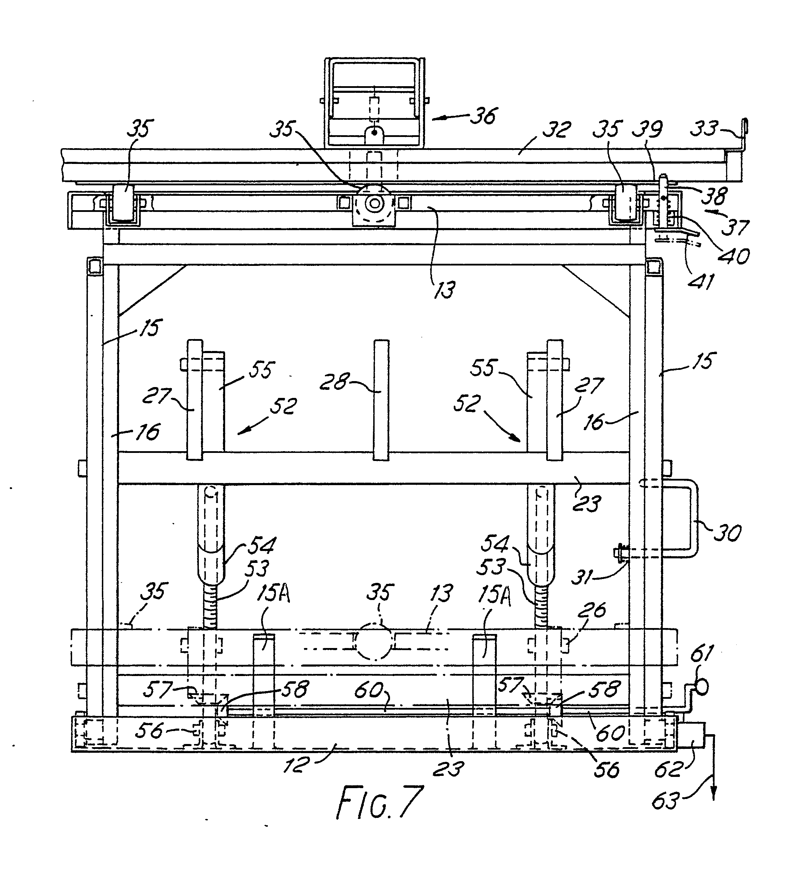

Figure 7 shows one alternative form of lifting units 52 in place of the gas struts 24. In this form, each unit 52 comprises a threaded strut or screw 53 engaging with a nut 54 fixed in a cylinder 55 pivotally mounted to the end of one of the torque bars 27. The lower end of each screw 53 is pivotally connected to the base frame l2 by pin 56 so as to be free to rotate about its axis and carries a bevel gear 57 engaging a bevel gear 58 carried by a rod 60 rotatable by a handle 6l. Turning of handle 6l acts to expand or contract the units 52 to move the lifting apparatus between its extended and collapsed conditions.

Instead of the handle 6l or other mechanical winding means, a motor 62 may be mounted on the base frame and arranged to drive the units 52, the motor preferably having a lead 63 for connection to a conventional vehicle battery to provide the power.

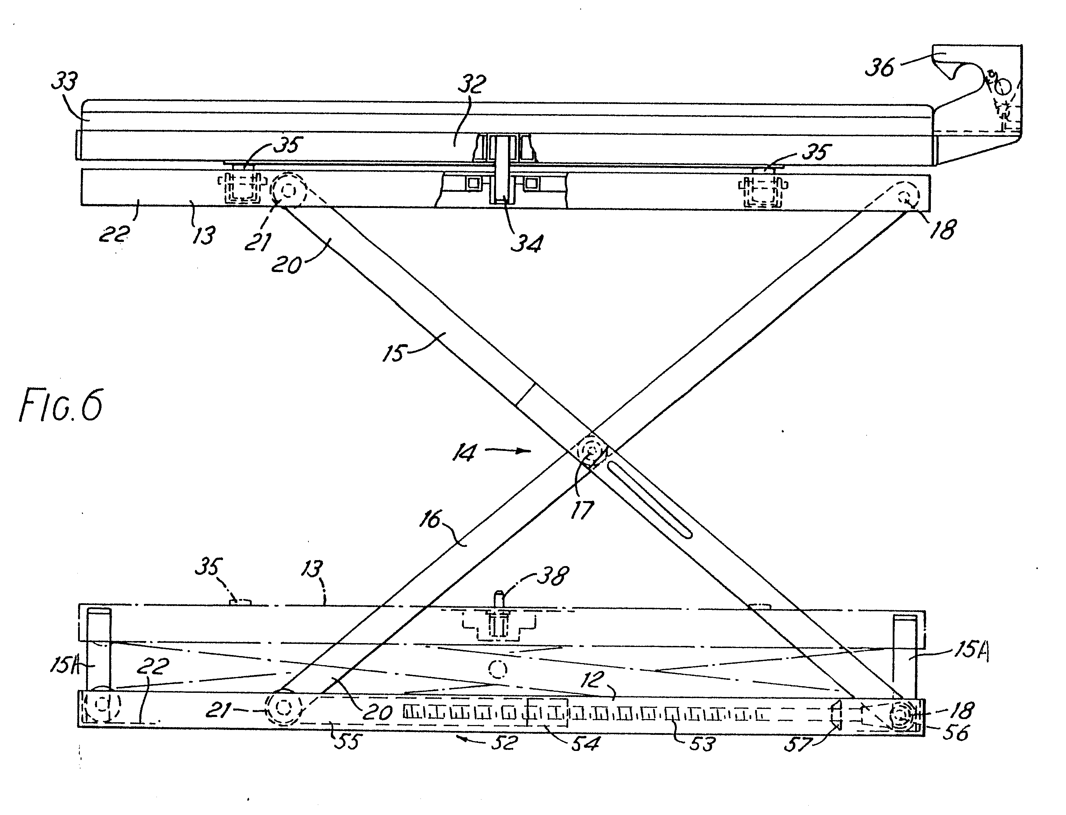

In a further alternative shown in Figure 6 units 52 corresponding to those in Figure 7 are connected between the base frame l2 and the lower end of bar l6 at each side of the frame, the screws 53 again being drivable through bevel gears and a winder or an electric motor to lift or lower the platform.

As an alternative (not illustrated) a rotatable cam could be interposed between the base frame and the lower end of each bar l6 so that rotation of the cam acts to raise and lower the platform.

## Claims

l. Apparatus for lifting comprising a base support(l2), an upper support(l3), a parallel movement coupling(l4) means connecting the base support and the upper support such that the upper support can be moved relative to the base support between a collapsed condition in which the supports lie adjacent one another and an extended condition in which they are spaced apart, at least one lifting means(24,52) effectively connected between the base support and the upper support and operable to move the upper support to its extended condition,characterised by a rotatable support platform(32) and platform mounting means (34,35) pivotally mounting the platform on the upper support for rotation through at least 90 degrees,and in that in the extended condition the upper support - (l3)lies substantially directly above the base support.

2. Apparatus for moving loads into and out of the back of a vehicle having a ledge extending above the floor of the back comprising in combination a foldable trolley(54) and lifting apparatus having a base support(l2), an upper support(l3), coupling means(l4) connecting the upper support to the base support for relative movement between a collapsed condition in which the supports lie adjacent one another and an extended condition in which they are spaced apart, locating means(45) arranged to locate the base support(l2) on the floor of a vehicle, the locating means including adjustable engagement means(50,5l) for restraining the locating means against horizontal movement, lifting means(24,52) effectively connected between the base support and the upper support for moving the upper support to its extended condition, characterised in that the lifting apparatus includes a rotatable platform(32), and platform mounting means- (34,35) mounting the platform on the upper support for rotation relative thereto through at least 90 degrees.

3. Apparatus according to claim l or claim 2 in which the lifting means comprises preloaded gas strut means(24).

4. Apparatus according to claim l or claim 2 characterised in that the or each lifting means comprises a cooperating screw and nut(53,54) arranged such that relative rotation therebetween moves the apparatus between its extended and collapsed conditions.

5. Apparatus according to claim l or claim 2 characterised in that the or each lifting means comprises at least two mechanically interconnecting members(53,54), relative rotation of which is arranged to move the apparatus between its extended and collapsed conditions,and an electric motor(62) arranged for causing such relative rotation,the motor being operable by a conventional vehicle battery.

6. Apparatus according to any of Claims l to 5 characterised by locking means (37)for locking the rotatable support platform in positions at 90° to one another.

7. Apparatus according to any of claims l to 6 characterised in that the or each lifting means is an extensible strut connected via a lever(27) to a torque bar(23) connected to the coupling means.

8. Apparatus according to any of claims I to 7 characterised in that the mounting means comprises a central pivot(34) and a plurality of angularly spaced roller bearings (35) on the upper support.

9. Apparatus according to Claim 2 or any claim dependent thereon characterised in that the locating means comprises a space frame defining a recess for receiving and locating the base support and having extendable retaining members(50) for locating it in a fixed position.

10.A method of loading and unloading a load into or out of a vehicle comprising moving a load supported on a detachable top of a trolley adjacent a vehicle containing a lifting apparatus, if necessary adjusting the height of the lifting apparatus and/or the height of the trolley base so that the upper surface of the lifting apparatus is substantially level with the top of the trolley base, moving the load and trolley top onto the lifting apparatus, revolving the top of the lifting apparatus and lowering the load on the lifting apparatus into the vehicle, the unloading comprising the reverse process.

FIG.1

0 238 215

FIG.2

FIG.3

FIG.4

FIG.5

FIG.6

0 238 215

FIG.7

# EUROPEAN SEARCH REPORT

**European Patent Office**

Application number

EP 87 30 1484

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 356 887 (FISHER) <br> * Abstract; figures 1-3 * | 1,8 | B 66 F 7/06 <br> B 66 F 7/08 <br> B 62 B 3/02 <br> B 60 R 5/04 |
| Y | | 2,3 | |
| D,Y | GB-A-2 157 258 (FERNO INTERNATIONAL) <br> * Abstract; figures 1,2,6; page 2, lines 89-128; page 4, lines 107-126 * | 2,3 | |
| X | DE-C- 910 114 (BEECK) <br> * Whole document * | 1,4 | |
| A | | 5 | |
| X | FR-A- 608 007 (SERRE) <br> * Whole document * | 1,4 | TECHNICAL FIELDS SEARCHED (Int. Cl.4) <br><br> B 66 F <br> B 62 B <br> B 60 R |
| X | EP-A-0 074 053 (SIEMENS) <br> * Abstract; page 10, lines 26-32; figures 1-3 * | 1,4 | E 04 G |
| A | US-A-3 451 655 (SCOTT) <br> * Column 3, lines 11-22; figure 1 * | 5 | |
| | --- -/- | | |

The present search report has been drawn up for all claims

| Place of search | Date of completion of the search | Examiner |
|---|---|---|
| THE HAGUE | 23-06-1987 | VAN DEN BERGHE E.J.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent
Office

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | FR-A-2 032 269 (LÖDIGE) <br> * Page 5, lines 29-39 * | 7 | |
| A | US-A-1 345 564 (THOMAS) | | |
| A | US-A-2 913 133 (TAKASHI YAGI) | | |

|  | TECHNICAL FIELDS SEARCHED (Int. Cl.4) |
|---|---|

The present search report has been drawn up for all claims

| Place of search | Date of completion of the search | Examiner |
|---|---|---|
| THE HAGUE | 23-06-1987 | VAN DEN BERGHE E.J.J |